# EUROPÄISCHE PATENTANMELDUNG

(11) **EP 1 947 473 A2**
(43) Veröffentlichungstag der Anmeldung: **23.07.2008**
(21) Anmeldenummer: 07119857.6
(22) Anmeldetag: 02.11.2007
(51) Int. Cl.: G01S 7/40, G01S 13/93

(54) **Verfahren und Messstrecke zum Ausrichten eines Abstandssensors**

(30) Priorität: 09.01.2007 DE 102007001367
(71) Anmelder: ROBERT BOSCH GMBH, 70442 Stuttgart (DE)
(72) Erfinder: Randler, Martin, 88090, Immenstaad (DE); Leineweber, Thilo, 70176, Stuttgart (DE); Olbrich, Herbert, 71277, Rutesheim (DE); Zeppelin, Frank, 70195, Stuttgart (DE); Lucas, Bernhard, 74354, Besigheim (DE); Beez, Thomas, 74189, Weinsberg (DE)

(57) **Zusammenfassung**

Die Erfindung betrifft ein Verfahren und eine Messstrecke (4) zum Ausrichten eines Abstandssensors (2) an einem Fahrzeug (1). Erfindungsgemäß weist die Messstrecke (4) eine geradlinig ausgerichtete Fahrbahn (3) und an einem Ende (5) der Fahrbahn (3) eine Bake (6) oder auf einem die Fahrbahn (3) begrenzenden Seitenstreifen (9, 11) angeordnete Baken (10, 12) auf. Eine Lage einer Bake (6, 10, 12) wird ermittelt und diesbezügliche Istdaten werden in einem Speicher abgelegt, die Istdaten werden mit in dem Speicher abgelegten Solldaten verglichen, eine Ausrichtung des Sensors wird ermittelt und bei Vorliegen einer Fehlausrichtung wird der Sensor ausgerichtet.

## Beschreibung

Die Erfindung betrifft ein Verfahren und eine Messstrecke zum Ausrichten eines Abstandssensors an einem Fahrzeug.

Aus der DE 197 46 524 A1 ist eine Kompensationseinrichtung zur Kompensation der Einbautoleranzen eines Abstandssensors an einem Fahrzeug bekannt, mit der Einbautoleranzen des Abstandssensors kompensiert werden. Mittels einer Auswerteelektronik werden während des Fahrbetriebs aktuelle Objektabstände und ein aktueller Objektwinkel für erfasste Objekte relativ zur Fahrzeugachse gemessen. Dabei wird der Dejustagewinkel durch Mittelwertbildung über viele Messungen zum aktuellen Zielobjekt bestimmt. Allerdings funktioniert diese Mittelwertbildung nur dann zufriedenstellend, wenn das Fahrzeug das Zielobjekt, ein vorausfahrendes zweites Fahrzeug, auf einer ausreichend langen geraden Strecke verfolgen kann, so dass häufige Messungen zum Zielobjekt durchführbar sind. Bei Straßenkrümmungen oder auch Berg- und Talfahrten mit sich änderndem Höhenwinkel versagt diese Methode.

Bei der Vorrichtung zur Berechnung und Korrektur eines Dejustagewinkels für einen Abstandssensor gemäß der EP 0 782 008 B1 wird dagegen der Winkel für die Abweichung von der Mittelachse mittels eines Regressionsverfahrens beschrieben. Dabei werden in jedem Messzyklus Winkel in Abhängigkeit vom Abstand von bewegten oder besser noch von stehenden Radarobjekten gemessen. Insbesondere bei sehr dichtem Verkehr sind jedoch nicht genügend geeignete Objekte im Sichtbereich des Sensors vorhanden, so dass nicht genügend Messwerte vorliegen. So hat jedes Verfahren den Nachteil, dass die Verfügbarkeit von Messwerten von der Fahrsituation beziehungsweise von der Verkehrssituation abhängt.

Der Erfindung liegt von daher die Aufgabe zugrunde, eine Messstrecke und ein einfaches Verfahren zum Ausrichten eines Abstandssensors anzugeben.

Diese Aufgabe wird mit den Merkmalen der Hauptansprüche gelöst. Erfindungsgemäß weist die Messstrecke eine geradlinig ausgerichtete Fahrbahn und an einem Ende der Fahrbahn eine Bake auf oder auf einem die Fahrbahn begrenzenden Seitenstreifen angeordnete Baken auf. Das Verfahren weist die folgenden Schritte auf: eine Lage einer Bake wird ermittelt und diesbezügliche Istdaten werden in einem Speicher abgelegt, die Istdaten werden mit in dem Speicher abgelegten Solldaten verglichen, eine Ausrichtung des Sensors wird ermittelt und bei Vorliegen einer Fehlausrichtung wird der Sensor ausgerichtet.

Auf dem Werksgelände, zum Beispiel auf dem Weg vom Bandende bis zum Abstellplatz, wird eine Messstrecke eingerichtet, die so beschaffen ist, dass der Fahrer zur Geradeausfahrt gezwungen ist. Am Ende der Messstrecke ist mittig eine Bake als stark reflektierendes Ziel angebracht. Alternativ oder zusätzlich hierzu werden rechts und links vom Fahrbahnrand auf einem die Fahrbahn begrenzenden Seitenstreifen weitere Baken als stark reflektierende Ziele angeordnet. Beim Befahren der Strecke wird der Abstandssensor eingeschaltet, um den Abstandssensor auszurichten. Der Abstandssensor ist ein Radar- oder Lidarsensor und wird auch als Abstandsradar oder kurz als Sensor bezeichnet. Beim Einbau des Sensors ergeben sich Einbautoleranzen, die sich bei Inbetriebnahme des Sensors als Winkelabweichungen von bis zu +4 Grad und -4 Grad bemerkbar machen. Die Radarsignalstrahlung wird als Radarsignalkeule mit einer maximalen Stärke in der Keulenmitte abgestrahlt. Die Winkelabweichung betrifft die Richtung der Keulenmitte zu der Fahrtrichtung. Ebenso weist die Lidarstrahlung eine Strahlungsmitte auf. Im Betrieb werden Abweichungen von lediglich + und - 0,2° als zulässig angesehen. Die Werte von +4 Grad und -4 Grad sind Startwerte, die als Grenzwerte gesetzt sind. Werden auf der Strecke Abweichungen größer als die Startwerte ermittelt, so deuten diese größeren Winkelabweichungen auf einen fehlerhaft montierten Sensor hin und der Einbau muss überprüft werden. Liegen die auf der Strecke ermittelten Abweichungen innerhalb der Grenzwerte von +4 Grad und -4 Grad, so ist mittels der in den eingangs genannten Entgegenhaltungen angegebenen und des erfindungsgemäßen Verfahrens ein Ausrichten des Sensors, auch als Dejustagekompensation bezeichnet, möglich. Die Dejustagekompensation erfolgt insofern, dass die Winkelabweichung in eine Lagebestimmung der georteten Objekte einbezogen wird. Bezüglich der Lagebestimmung innerhalb eines XY-Koordinatensystems wird auf den Inhalt der EP 0 782 008 B1 und insbesondere auf einen Objekterkennungs- und Koordinatentransformationsblock dieser Schrift verwiesen.

Die Messstrecke weist eine Fahrbahn mit Fahrbahnrändern, auch als Fahrbahnbegrenzungen bezeichnet, und mit Markierungen an den Fahrbahnbegrenzungen auf. Die Fahrbahnbegrenzung ist in einfacher Weise als Ende einer Asphalt- oder Betondecke ausgebildet. An einem Ende der Fahrbahn ist mittig zu der Fahrbahn eine Bake angeordnet. Fährt das Fahrzeug innerhalb der Markierungen auf der Fahrbahn, so ist die Lage der Bake einer Auswerteeinrichtung bekannt und damit ist in der Auswerteeinrichtung eine Fehlausrichtung, auch als Dejustage bezeichnet, des Sensors ermittelbar. Dabei wird vorausgesetzt, dass das Fahrzeug im Mittel in der Fahrbahnmitte fährt und sich die Dejustage des Sensors über eine Mittelwertbildung berechnen lässt. Daten der Messstrecke und der Lage der Bake sind in einem Speicher der Auswerteeinrichtung abspeicherbar und damit der Auswerteeinrichtung bekannt.

Des weiteren weist die Messstrecke weitere auf einem linken und rechten Seitenstreifen hintereinander und in einer Linie angeordnete Baken auf. Jeweils eine auf dem linken und eine auf dem rechten Seitenstreifen angeordnete Bake sind in gleicher Fahrbahnhöhe angeordnet. Der Abstand der Baken untereinander und der Abstand zu den Fahrbahnmarkierungen und der Fahrbahnbegrenzung sind der Auswerteeinrichtung bekannt. Fährt das Kraftfahrzeug im Mittel mittig auf der Fahrbahn, so lässt sich die Lage einzelner, zweier sich auf gleicher Höhe gegenüberstehender Baken oder mehrerer Baken bestimmen und daraus eine Fehlausrichtung des Sensors berechnen. Diese Fehlausrichtung ist dann mittels einfacher Berechnungen kompensierbar. Ein Kraftfahrzeugführer orientiert sich anhand der Bake beziehungsweise der Baken und anhand der Fahrbahnmarkierungen und -begrenzungen.

Aufgrund der Vielzahl der Baken lässt sich in vorteilhafter Weise sehr schnell ein sicheres Bild der Umgebung und damit eine hohe Wahrscheinlichkeit der Istdaten ermitteln.

Werden Dejustagewinkel in vorteilhafter Weise statistisch ermittelt, lässt sich genauer und exakter justieren.

Ist in vorteilhafter Weise das Verfahren für eine begrenzbare Zeitdauer oder für eine begrenzbare Fahrstrecke aktiv schaltbar, so ist das Verfahren für die Messstrecke einsetzbar. Das Verfahren kommt nach Montage des Fahrzeugs oder nach Wartungsarbeiten am Fahrgestell oder am Sensor für die begrenzbare Zeitdauer oder Fahrstrecke zum Einsatz.

Zum besseren Verständnis der Erfindung sind nachfolgend Ausführungsbeispiele anhand der Zeichnung näher erläutert.

Es zeigen:
- Fig. 1: ein Kraftfahrzeug mit einem Abstandssensors auf einer Messstrecke mit einer mittleren Bake und
- Fig. 2: ein Kraftfahrzeug mit einem Abstandssensors auf einer Messstrecke mit auf Seitenstreifen angeordneten Baken.

In den verschiedenen Figuren sind ähnliche oder dieselben Elemente durch gleiche Bezugszeichen bezeichnet.

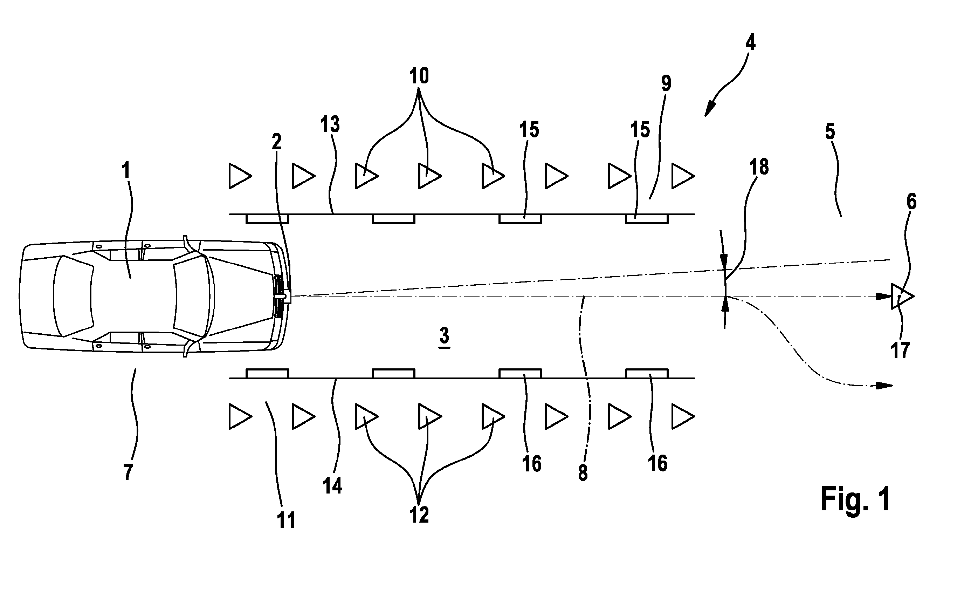

Figur 1 zeigt ein Kraftfahrzeug 1 mit einem Abstandssensor 2 auf einer Fahrbahn 3 einer Messstrecke 4. Die Messstrecke 4 weist an einem oberen Ende 5 eine mittig zur Fahrbahn 3 angeordnete Bake 6 auf. Das Fahrzeug 1 fährt von einem unteren Ende 7 der Fahrbahn 3 kommend in Fahrtrichtung 8 auf die mittlere Bake 6 zu. Auf einem linken Seitenstreifen 9 der Messstrecke 4 sind ortsfeste Baken 10 hintereinander in Linie angeordnet und auf einem rechten Seitenstreifen 11 der Messstrecke 4 sind weitere ortsfeste Baken 12 hintereinander in Linie angeordnet. Die Fahrbahn 3 weist eine linke und eine rechte linienartige Fahrbahnbegrenzung 13, 14 und linke und rechte Fahrbahnmarkierungen 15, 16 auf. Die Bezeichnung linker und rechter Seitenstreifen 9, 11, linke und rechte Baken 10, 12, linke und rechte Fahrbahnbegrenzung 13, 14 und linke und rechte Fahrbahnmarkierungen 15, 16 beziehen sich auf die Fahrtrichtung 8 des Fahrzeugs 1. Jeweils eine auf dem linken Seitenstreifen 9 und eine auf dem rechten Seitenstreifen 11 angeordnete Bake 10, 12 sind auf gleicher Höhe angeordnet. Die Radarsignalstrahlung der Keulenmitte, die von dem Abstandsradar 2 ausgeht, fällt im Idealfall mit der Fahrtrichtung 8 zusammen und trifft im Idealfall eine Mitte 17 der Bake 6. Liegt eine Fehlausrichtung des Sensors 2, auch als Abweichung des Sensors 2 bezeichnet, vor, so ist die Bake 6 unter einem Dejustagewinkel 18 ermittelbar. Dieser Dejustagewinkel 18 ist bei Kenntnis der Bakenanordnung auf der Messstrecke 4 ermittelbar und der Sensor 2 ausrichtbar.

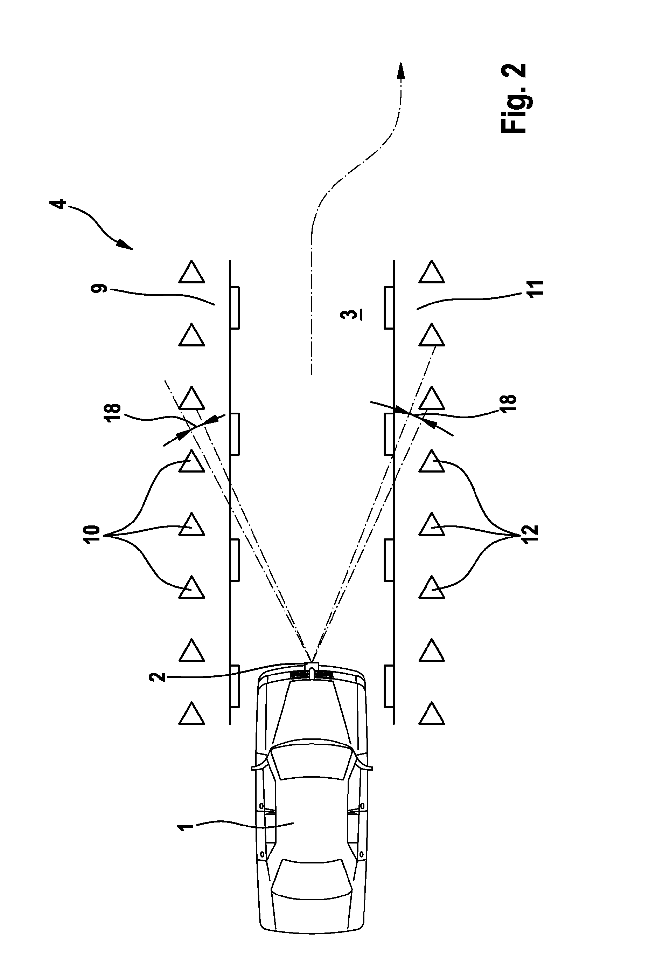

Figur 2 zeigt das Kraftfahrzeug 1 mit dem Abstandssensor 2 auf der Fahrbahn 3 der Messstrecke 4. Auf dem linken Seitenstreifen 9 der Messstrecke 4 sind ortsfeste Baken 10 hintereinander in Linie angeordnet und auf dem rechten Seitenstreifen 11 der Messstrecke 4 sind weitere ortsfeste Baken 12 hintereinander in Linie angeordnet. Die linken und rechten Baken 10, 12 sind mittels des Radarsensors 2 und eine Lage dieser Baken 10, 12 in einem Koordinatensystem ermittelbar. Dazu wird auf den Inhalt der EP 0 782 008 B1 und insbesondere auf einen Objekterkennungs- und Koordinatentransformationsblock dieser Schrift verwiesen. Da der Auswerteeinrichtung des Abstandsradars 2 die Lage der Baken 10, 12 in dem Koordinatensystem bekannt ist, ist über eine Mittelwertbildung der Dejustagewinkel 18 als Fehlausrichtung des Sensors 2 ermittelbar und die Fehlausrichtung 18 kompensierbar. Bei der Mittelwertbildung wird im wesentlichen davon ausgegangen, dass das Kraftfahrzeug 1 im Mittel mittig auf der Fahrbahn 3 fährt. Auch die Lage der Baken 10,12 ist im wesentlichen statistisch mit einer Mittelwertbildung ermittelbar.

## Patentansprüche

1. Messstrecke (4) zum Ausrichten eines Abstandssensors (2) an einem Fahrzeug (1), **dadurch gekennzeichnet, dass** die Messstrecke (4) eine geradlinig ausgerichtete Fahrbahn (3) und an einem Ende (5) der Fahrbahn (3) eine Bake (6) aufweist.

2. Messstrecke nach Anspruch 1, **dadurch gekennzeichnet, dass** die Bake (6) in einer Fahrbahnmitte angeordnet ist.

3. Messstrecke (4) zum Ausrichten eines Abstandssensors (2) an einem Fahrzeug (1), **dadurch gekennzeichnet, dass** die Messstrecke (4) eine geradlinig ausgerichtete Fahrbahn (3) und auf einem die Fahrbahn (3) begrenzenden Seitenstreifen (9, 11) angeordnete Baken (10, 12) aufweist.

4. Messstrecke nach Anspruch 3, **dadurch gekennzeichnet, dass** die Baken (10, 12) in gleicher Höhe bezüglich der Fahrbahn (3) angeordnet sind.

5. Messstrecke nach einem der vorhergehenden Ansprüche 1 - 4, **dadurch gekennzeichnet, dass** die Fahrbahn (3) Fahrbahnmarkierungen (15, 16) aufweist.

6. Verfahren zum Ausrichten eines Abstandssensors (2) an einem Fahrzeug auf einer Messstrecke (4) gemäß einem der vorhergehenden Ansprüche 1 -5, mit folgenden Verfahrensschritten:
eine Lage einer Bake (6, 10, 12) wird ermittelt und diesbezügliche Istdaten werden in einem Speicher abgelegt,
die Istdaten werden mit in dem Speicher abgelegten Solldaten verglichen,
eine Ausrichtung des Sensors wird ermittelt und
bei Vorliegen einer Fehlausrichtung wird der Sensor ausgerichtet.

7. Verfahren nach Anspruch 6, **dadurch gekennzeichnet, dass** die Lage der Bake (6, 10, 12) während der Fahrt statistisch ermittelt wird.

8. Verfahren nach Anspruch 6, **dadurch gekennzeichnet, dass** die Fehlausrichtung statistisch ermittelt wird.

9. Verfahren nach Anspruch 6, **dadurch gekennzeichnet, dass** das Verfahren für eine begrenzbare Zeitdauer aktiv schaltbar ist.

10. Verfahren nach Anspruch 6, **dadurch gekennzeichnet, dass** das Verfahren für eine begrenzbare Fahrstrecke aktiv schaltbar ist.
